# FASCICULE DE BREVET EUROPEEN

(11) **EP 2 731 475 B1**
(45) Date de publication et mention de la délivrance du brevet: **08.08.2018**
(21) Numéro de dépôt: 12744082.4
(22) Date de dépôt: 11.07.2012
(51) Int. Cl.: A47J 27/00, A47J 27/022

(54) **ARTICLE CULINAIRE ALIMENTE PAR INDUCTION ET PROCEDE POUR FABRIQUER LE RECIPIENT D'UN TEL ARTICLE**
INDUKTIV GESPEISTER KÜCHENARTIKEL UND VERFAHREN ZUR HERSTELLUNG DES EMPFÄNGERS EINES SOLCHEN ARTIKELS
INDUCTIVELY POWERED CULINARY ARTICLE AND PROCESS FOR MANAFACTURING THE RECIPIENT OF SUCH AN ARTICLE

(30) Priorité: 13.07.2011 FR 1156375
(43) Date de publication de la demande: 21.05.2014
(73) Titulaire: SEB S.A., 69130 Ecully (FR)
(72) Inventeur: HERRADA, José, Luis, F-38200 Vienne (FR); BONNEL, Jocelyn, F-73310 Vions (FR); LEBOEUF, Stéphane, F-74150 Rumilly (FR); BOUSSY, Edwige, F-74150 Etercy (FR)
(74) Mandataire: Bourrières, Patrice
(86) Numéro de dépôt international: PCT/FR2012/051643
(87) Numéro de publication internationale: WO 2013/007953

(56) Documents cités:
- WO-A1-2010/080738
- WO-A2-99/41950
- US-A- 3 742 178
- US-A1- 2002 008 102

## Description

La présente invention concerne un article culinaire compatible avec un chauffage par induction et un procédé pour fabriquer le récipient de cet article culinaire.

Cet article culinaire comprend un récipient qui peut être une casserole ou une poêle, par exemple, et est destiné à être posé sur un moyen de chauffage par induction tel une plaque à induction générant un champ magnétique.

Un exemple d'article culinaire compatible avec un chauffage par induction est décrit dans le document FR2919168 qui divulgue un article culinaire comprenant un récipient présentant, en face extérieure/inférieure, un fond rapporté recouvrant au moins partiellement le fond de l'article. L'article culinaire est constitué de fonte d'aluminium et le fond rapporté est un fond multicouche comprenant au moins une couche avec du fer, ce qui rend l'article compatible avec un chauffage par induction.

Lorsque le récipient (ou calotte) est posé sur le moyen de chauffage par induction ou plus précisément une surface inductive, un courant de Foucault est généré sur le fond du récipient. L'énergie électrique est ensuite dissipée par la chaleur, chauffant les aliments contenus dans le récipient.

Le document WO 2010/080738 divulgue un article culinaire comprenant un récipient compatible avec un chauffage par induction et une poignée fixée au récipient. Le récipient comprend une base rapportée formant le fond du récipient qui est posé sur les moyens de chauffage. La base comprend une bobine faisant office d'inducteur secondaire pour récupérer de l'énergie électrique d'un inducteur primaire formé par les moyens de chauffage. La bobine est disposée entre la base et le récipient. Le récipient peut être posé sur la base pour permettre son dégagement de la base ou être collé à la base. Une plaque d'isolation thermique peut être disposée entre le fond du récipient et l'ensemble formé par la base et la bobine. L'énergie récupérée par la bobine permet d'alimenter un circuit de contrôle, un capteur de température, des moyens d'affichage et des moyens de communication prévus dans la poignée et/ou de recharger un élément de stockage (capacité ou batterie) également disposé dans la poignée.

Cependant, cet article culinaire compatible avec un chauffage par induction de l'art antérieur présente un agencement complexe nécessitant plusieurs éléments dont une base supportant la bobine qui est placée entre les moyens de chauffage par induction et la bobine. La présence de ces deux éléments fait que l'ensemble est lourd à transporter. Lorsque la base est fixée au récipient par de l'adhésif, il arrive qu'avec le vieillissement de ce dernier provoqué par de multiples lavages et par le temps, que la base se désolidarise partiellement ou complètement du récipient. Ceci entraine une connexion électrique moins bonne entre les bornes de la base et celles du récipient.

Ainsi, l'invention vise à remédier à ces inconvénients et à fournir un article culinaire compatible avec un chauffage par induction de conception plus simple, plus facile à utiliser et plus robuste.

L'invention concerne un article culinaire compatible avec un chauffage par induction et comprenant :
- un récipient métallique adapté à recevoir des aliments et comprenant un substrat métallique comportant un fond magnétisable (c'est-à-dire compatible avec un chauffage par induction) et une paroi latérale se dressant en périphérie du fond, le fond présentant une surface interne recevant les aliments et une surface externe adaptée à reposer sur un moyen de chauffage par induction externe,
- un dispositif électrique et/ou électromécanique,
- au moins une bobine générant de l'électricité à partir d'un flux magnétique produit par le moyen de chauffage par induction pour alimenter le dispositif électrique et/ou électromécanique, et,
   - un ustensile de cuisine, accessoire du récipient, tel une poignée ou un couvercle, qui comprend le dispositif électrique et/ou électromécanique (5).

Selon l'invention, la bobine est disposée à l'endroit du fond :
- soit sur la surface interne ou externe du fond du récipient,
- soit noyée dans ledit substrat, au sein :
   * soit d'un matériau métallique moulé,
   * soit de plusieurs couches métalliques liées entre elles, au moins à l'écart de la résistance électrique et sans adhésif collant, par déformation et/ou liaison métallique physico-chimique.

La bobine est disposée sur la surface externe ou la surface interne du fond du récipient de manière à être en contact avec l'une ou l'autre des surfaces. De préférence, la bobine est fixée directement sur la surface externe ou la surface interne du fond du récipient de façon à ce que cette surface porte la bobine.

Ainsi, l'invention fournit un article culinaire compatible avec un chauffage par induction de conception plus simple puisque que l'utilisation d'éléments supplémentaires tels une base portant la bobine n'est pas nécessaire. Le nombre de pièces est donc réduit.

L'article culinaire est également plus facile à utiliser et plus robuste.

De plus, lorsque la bobine est disposée sur la surface externe du récipient, l'invention permet d'augmenter la quantité d'énergie électrique récupérée par la bobine puisque la bobine est directement en contact ou presque, lorsqu'elle est recouverte par une couche d'isolant électrique, avec la surface de chauffage par induction. De préférence, la bobine, annulaire ou enroulée, est notamment disposée à l'endroit du fond. L'énergie magnétique générée par la surface de chauffage par induction n'est pas perturbée par un élément intermédiaire.

Pour satisfaire avantageusement au cas d'une utilisation de chauffe intense, quelle que soit la position (noyée ou en surface) de la résistance, on conseille par ailleurs que le fond de la calotte, qui présente une surface inférieure à poser, de façon stable, en face d'une source externe de chauffage comprenant l'une parmi : une plaque électrique, une flamme issue d'une source de gaz, une bobine d'induction pour un chauffage par induction du récipient, est adaptée pour résister à la chaleur de ladite source externe de chauffage, et comprend pour cela :
- une structure de substrat multicouches (avec, pour des raisons mécaniques et thermiques, a priori au moins trois telles couches qui peuvent être en métaux ou alliages métalliques différents),
- et/ou au moins :
   * une empreinte de rigidification,
   * ou un insert en un métal magnétisable (par exemple ferromagnétique) qui est fixé à une couche métallique malléable du substrat et/ou qui est plus dur que cette couche malléable (côté surface inférieure).

Ainsi on alliera performances thermique et mécanique, avec une bonne tenue dans le temps, quelle que soit la source externe de chauffage parmi celles précitées.

Parmi ces possibilités est donc prévue celle d'une calotte (ou récipient) à fond renforcé et/ou compatible avec un chauffage par induction, cette calotte à fond et paroi latérale monoblocs et en un même matériau métallique (par exemple de l'aluminium) étant extérieurement, sous son fond, liée (bonded en anglais) avec une couche métallique (tel de l'aluminium) plus malléable que celle définissant une coupelle inférieure par exemple en acier ferritique, donc magnétisable ou ferromagnétique, recouvrant ladite couche métallique plus malléable. Une frappe à chaud (pour la réalisation du fond multicouche) associée à un emboutissage (pour la réalisation de la paroi latérale) peuvent alors en particulier convenir, en tant que technique de fabrication.

D'autres caractéristiques et avantages de l'invention ressortiront clairement de la description qui en est faite ci-après, à titre indicatif et nullement limitatif, en référence aux dessins annexés, dans lesquels :
- la figure 1 représente une vue en perspective d'une poignée amovible en position ouverte, selon un mode de réalisation de l'invention ;
- la figure 2 représente une vue en perspective d'un récipient, selon un mode de réalisation de l'invention ;
- la figure 3 représente une coupe longitudinale d'un article culinaire compatible avec un chauffage par induction, selon un mode de réalisation de l'invention ;
- la figure 4 représente une vue en perspective d'un récipient, selon un autre mode de réalisation de l'invention ;
- la figure 5 représente une vue de face d'un mors fixe d'une poignée, selon un mode de réalisation de l'invention ;
- la figure 6 représente une coupe longitudinale en détail d'un plot de connexion électrique, selon un mode de réalisation de l'invention;
- la figure 7 représente une coupe longitudinale en détail de ce plot de connexion électrique connecté à une borne du récipient;
- la figure 8 représente une coupe longitudinale en détail d'un plot de connexion électrique en regard d'une borne de forme concave, selon un autre mode de réalisation de l'invention;
- la figure 9 représente une coupe longitudinale en détail de ce plot de connexion électrique connecté à cette borne de forme concave ;
- la figure 10 représente deux bobines d'inductance, selon un mode de réalisation de l'invention ;
- la figure 11 représente une bobine, selon un autre mode de réalisation de l'invention ;
- la figure 12 représente une coupe longitudinale d'une poignée amovible munie de pinces motorisées en position ouverte, selon un mode de réalisation possible ;
- la figure 13 représente une vue en coupe d'une poignée comprenant une borne connectable à l'extrémité du bord du récipient ;
- la figure 14 représente un récipient selon un mode de réalisation possible ;
- la figure 15 représente un récipient muni d'un couvercle ;
- la figure 15a représente le détail des bornes de ce récipient ;
- la figure 16 représente un récipient muni de LED ;
- la figure 17 représente une vue en coupe transversale d'un fond comprenant un fil métallique entouré d'une gaine isolante électriquement, disposée entre deux couches métalliques dont une couche d'aluminium et une couche d'inox ferritique ;
- la figure 18 représente une vue en coupe transversale d'un fond comprenant une bobine formée par une piste sérigraphiée ;
- la figure 19 représente une vue en coupe transversale d'un fond comprenant deux bobines superposées chacune formée par une piste sérigraphiée ;
- la figure 20 représente un récipient selon un autre mode de réalisation possible,
- et les figures 21,22 montrent chacune une demi-coupe verticale, fond en haut, d'un récipient à fond rapporté où une bobine de récupération d'énergie électrique est disposée, les figures 23,24 illustrant deux variantes, avec chacune une vue plus localisée d'un fond avec bobine incorporée.

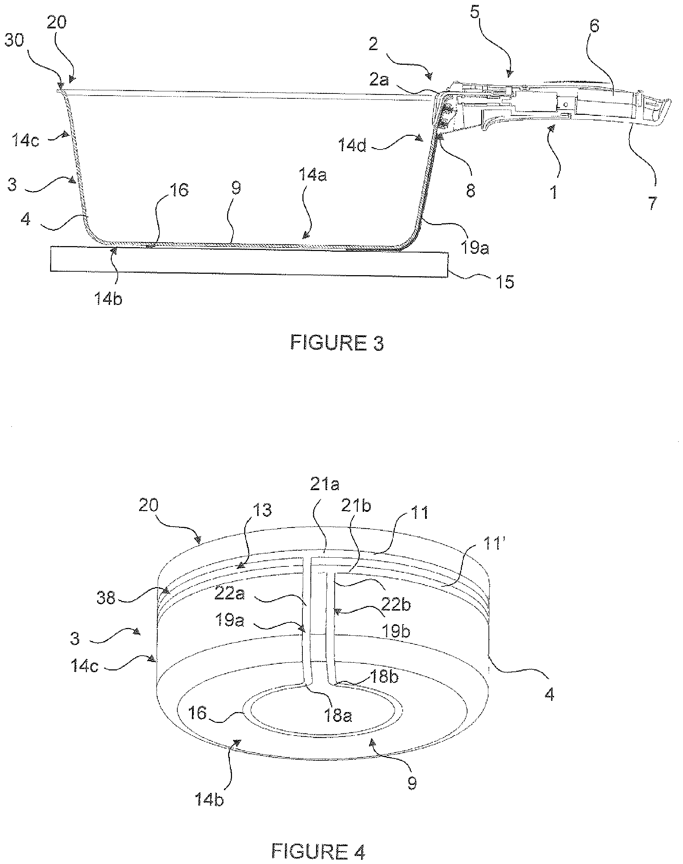

Comme illustré sur la figure 3, l'article culinaire compatible avec un chauffage par induction comprend un récipient 3 métallique adapté à recevoir des aliments et comprenant un substrat métallique comportant un fond 9 magnétisable (c'est-à-dire compatible avec un chauffage par induction) et une paroi latérale 4 se dressant en périphérie du fond 9, c'est-à-dire dans le prolongement du fond 9, sur toute sa périphérie. Le fond 9 présente une surface interne 14a recevant les aliments (venant en contact avec la surface interne 14a) et une surface externe 14b adaptée à reposer sur un moyen de chauffage par induction 15 externe. Un exemple d'article culinaire compatible avec un chauffage par induction est décrit dans le document FR2919168. D'autres types d'articles culinaires compatibles avec un chauffage par induction sont possibles. Ils comprennent plusieurs couches métalliques dont une couche ferromagnétique, à l'endroit du fond au moins.

L'article culinaire comprend un dispositif électrique et/ou électromécanique 5 et une poignée 1 fixée au récipient 3 pour la préhension de l'article culinaire. Le dispositif électrique et/ou électromécanique 5 peut être disposé dans la poignée ou ailleurs comme par exemple sur le récipient (s'il s'agit d'un dispositif électromécanique) ou sur un couvercle ou autre ustensile de cuisine, accessoire du récipient 3.

On comprend par ustensile de cuisine, tout accessoire du récipient, pouvant être fixe ou amovible ou mobile par rapport au récipient 3.

Dans l'exemple de la figure 3, la poignée comprend un corps de préhension 7 et un dispositif électrique et/ou électromécanique 5 logé dans le corps de préhension 7. L'article culinaire comprend au moins une bobine 16 assurant une récupération d'énergie électrique en générant de l'électricité à partir d'un flux magnétique produit par le moyen de chauffage par induction. Ce flux magnétique permet d'alimenter le dispositif électrique et/ou électromécanique de la poignée 1. La bobine 16 est disposée sur la surface externe 14b du fond 9 du récipient 3, de préférence à ailleurs, notamment la surface interne 14a.

La bobine 16 est en contact avec l'une ou l'autre des surfaces externe 14b ou interne 14a du fond 9. De préférence, la bobine 16 est fixée sur la surface externe du fond du récipient de façon à ce que cette surface porte la bobine. Une couche de protection peut être prévue pour recouvrir la bobine.

La bobine 16 peut être un fil métallique collé à l'une des surfaces du récipient par de la colle ou de l'adhésif ou fixé par soudure ou autre.

De préférence, la bobine 16 est déposée sur la surface externe 14b ou la surface interne 14a du fond 9 du récipient 4. De manière encore plus préférée, la bobine 16 est déposée par sérigraphie de façon à obtenir une piste sérigraphiée. La piste sérigraphiée comprend au moins un matériau électriquement conducteur comme l'argent ou le cuivre par exemple.

Avantageusement, la bobine 16 est disposée sur la surface externe 14b du fond 9 du récipient 3, permettant une proximité avec la surface du moyen de chauffage par induction 15, sans écran magnétique entre eux (une couche de PTFE ou d'émail étant possible, puisque ne formant pas un tel écran).

La bobine 16 peut être recouverte d'une couche de protection qui peut être soit en email, en polytétrafluoroéthylène (PTFE), en céramique ou une laque. Cette couche de protection assure une protection mécanique, thermique, et physicochimique de la bobine 16.

Le récipient comprend avantageusement une couche d'isolant électrique déposée sur la surface externe 14b ou interne 14a du fond 9. Cette couche d'isolant électrique sépare la surface métallique et donc conductrice du récipient, de la bobine 16. La bobine 16 est déposée sur cette couche d'isolant électrique. Cette couche d'isolant électrique peut être soit en email, en polytétrafluoroéthylène (PTFE), en céramique ou une laque.

En variante, la bobine 16 peut être intégrée dans le substrat métallique au sein de plusieurs couches métalliques liées entre elles, au moins à l'écart de la bobine 16 et sans adhésif collant, par contact métallique direct (sous pression) et imbrication et/ou liaison métallique physico-chimique (avec continuité).

Les couches du substrat métallique sont avantageusement fixées entre elles par frappe à froid ou à chaud. Les couches métalliques sont liées entre elles par déformation plastique des métaux.

La bobine 16 peut être noyée dans le substrat, au sein du matériau métallique moulé.

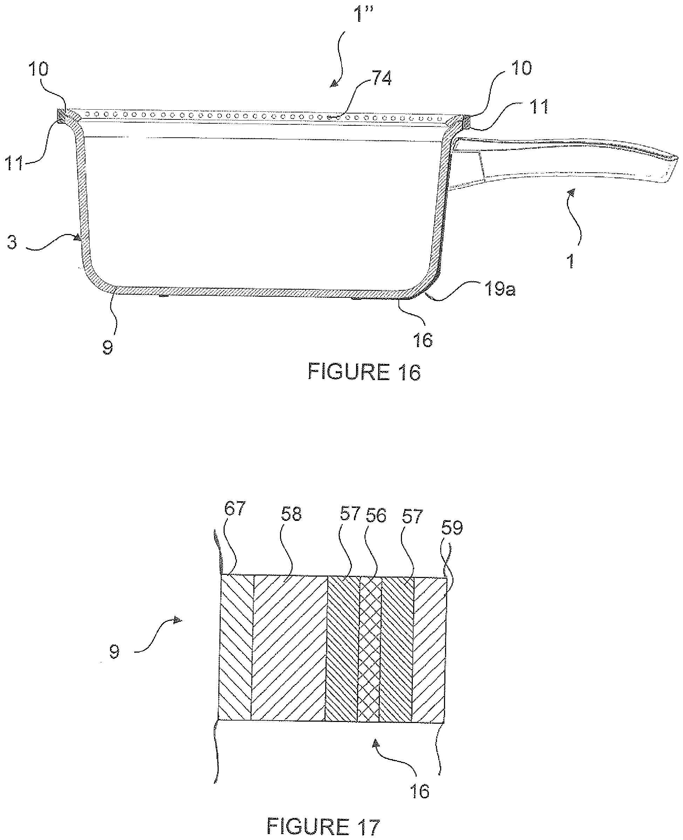

La bobine 16 peut être formée d'un fil métallique 56 entouré d'une gaine isolante électriquement 57 et maintenue entre deux couches métalliques dont une couche à base d'aluminium 58 et une couche à base d'acier inoxydable ferritique 59, comme représenté sur la figure 17 (le fond 9 formé des différentes couches étant représenté suivant une rotation de 90° par rapport à un plan horizontal). La couche à base d'acier inoxydable ferritique 59 forme la couche externe du fond 9 qui vient en regard de la surface de chauffe par induction. Autrement dit, la couche externe du fond 9 comprend la surface externe 14b du fond. La couche d'aluminium 58 est recouverte d'une couche interne de protection 67. La gaine isolante électriquement 57 est transparente à un flux magnétique et peut être en polymère.

De préférence, la couche d'aluminium 58 comprend une gorge recevant le fil métallique 56.

La couche à base d'acier inoxydable ferritique 59 présente une épaisseur inférieure à 1 cm et de préférence inférieure ou égale à 0,6 cm de façon à laisser passer le plus possible de flux magnétique.

En variante, la bobine 16 peut être formée d'une piste sérigraphiée disposée entre deux couches métalliques dont une couche à base d'aluminium 58 et une couche à base d'acier inoxydable ferritique 59. La couche à base d'aluminium 58 est recouverte d'un isolant électrique sur lequel est déposé la piste sérigraphiée.

La couche à base d'aluminium 58 peut éventuellement être recouverte d'une couche à base d'acier inoxydable, elle-même recouverte d'un revêtement interne de protection.

La couche à base d'aluminium 58 peut être en aluminium ou en alliage d'aluminium.

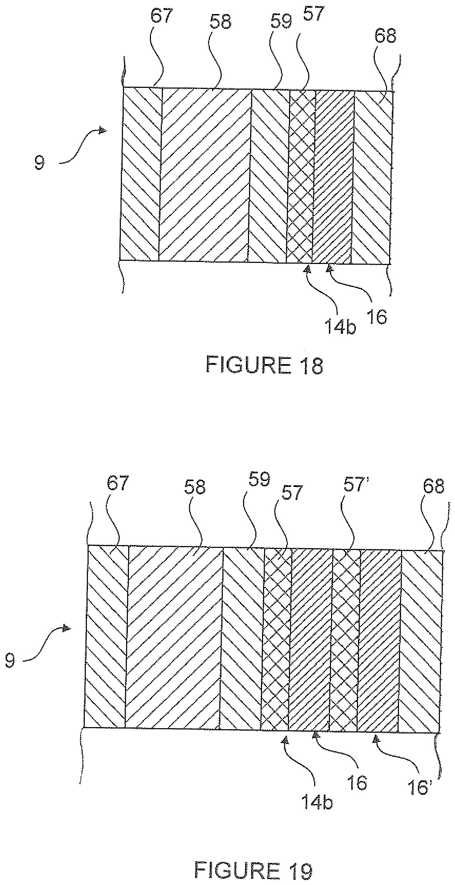

La figure 18 représente un autre exemple de fond 9 (représenté suivant une rotation de 90° par rapport à un plan horizontal) comprenant une bobine 16 formée par une piste sérigraphiée et déposée sur la surface externe 14b du fond 9. Cette piste est recouverte d'une couche de protection 68 transparente à un flux magnétique. Le fond 9 comprend un isolant électrique 57 sur lequel est déposée la piste. L'isolant 57 recouvre une couche à base d'acier inoxydable ferritique 59 qui est fixée par liaison métallique à une couche à base d'aluminium 58. La couche à base d'aluminium 58 est recouverte d'une couche interne de protection 67.

La figure 19 illustre un exemple de fond 9 (représenté suivant une rotation de 90° par rapport à un plan horizontal) comprenant deux bobines 16, 16' superposées. Chacune d'elle est formée par une piste sérigraphiée. Le fond 9 comprend une couche à base d'acier inoxydable ferritique 59 qui est fixée par liaison métallique à une couche à base d'aluminium 58. La couche à base d'aluminium 58 est recouverte d'une couche interne de protection 67. La couche à base d'acier inoxydable ferritique 59 est recouverte d'un premier isolant électrique 57, lui-même recouvert par une première piste sérigraphiée 16, qui est recouverte par un deuxième isolant électrique 57'. Le deuxième isolant électrique 57' est recouvert par une deuxième piste sérigraphiée 16' superposée à la première piste sérigraphiée 16. La deuxième piste sérigraphiée 16' est recouverte par une couche de protection 68 transparente à un flux magnétique.

En variante, dans les exemples donnés ci-dessus, le fond 9 peut comprendre des couches métalliques supplémentaires, comme de l'aluminium ou de l'acier inoxydable, recouvrant la couche à base d'aluminium 58.

La poignée 1 peut être fixée de manière permanente au récipient 3 ou être avantageusement amovible du récipient 3.

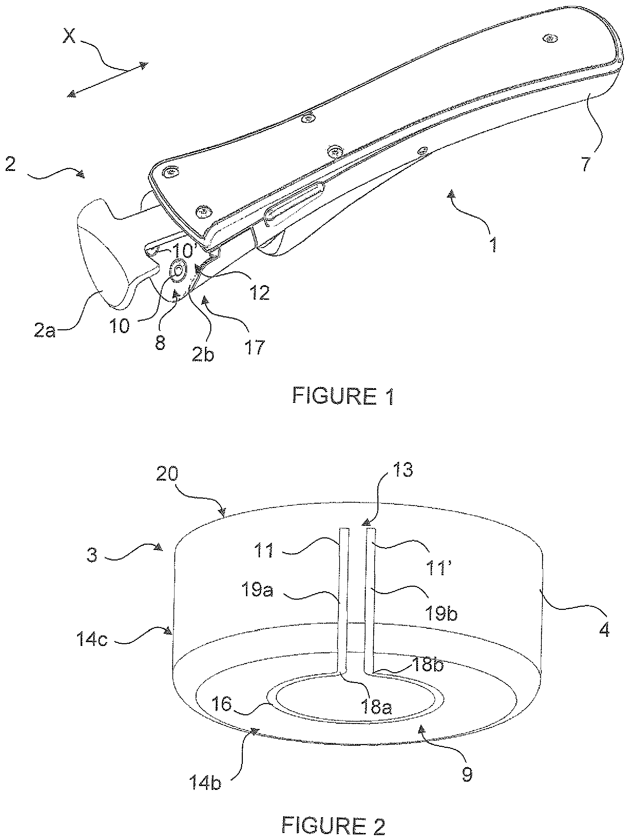

Selon un mode de réalisation préféré, la poignée 1 comprend des moyens de fixation 2 connectables au récipient 3 et déconnectables de celui-ci de façon à former une poignée amovible et au moins une borne de connexion 10, 10' (figure 1) reliée au dispositif électrique et/ou électromécanique 5. La borne de connexion 10, 10' est connectable électriquement avec au moins une borne complémentaire 11, 11' prévue sur le récipient 3 qui est reliée à la bobine 16.

Les moyens de fixation 2 comprennent une surface de contact 12 adaptée à venir en contact avec une surface de contact complémentaire 13 prévue sur le récipient 3 afin d'assurer la fixation de la poignée 1 sur le récipient 3. La surface de contact 12 des moyens de fixation 2 porte au moins une borne 10, 10'.

Les moyens de fixation 2 comprennent deux mors 2a, 2b formant pince et mobiles l'un par rapport à l'autre pour fixer la poignée 1. L'un des deux mors 2a, 2b comprend au moins deux bornes 10, 10'.

Les deux mors 2a, 2b pincent la paroi 4 du récipient 3 sur laquelle est disposée au moins une borne complémentaire 11, 11'. Chaque borne 10, 10' de la poignée 1 est en contact avec cette borne complémentaire 11, 11'.

Les deux mors 2a, 2b formant pince comprennent un mors fixe 2b et un mors mobile 2a par rapport au corps de préhension 7. Les bornes 10, 10' sont disposées sur le mors fixe 2b, comme représenté sur la figure 1. De préférence, le mors fixe 2b est formé par une partie avant 17 du corps de préhension 7 qui est en contact avec la surface externe 14c de la paroi du récipient 3.

En variante, la poignée 1 peut comprendre des moyens de stockage d'énergie électrique 6 (accumulateur ou super capacité) logés dans le corps de préhension 7 et reliés électriquement à la fois à la bobine 16 pour son rechargement en énergie électrique et au dispositif électrique et/ou électromécanique 5 pour l'alimenter. Par exemple, l'accumulateur peut présenter une tension de 3,6 Volt et une capacité de 780 milliampères*hrs.

Selon un mode de réalisation possible, la bobine 16 comprend une boucle ouverte et deux extrémités 18a, 18b chacune reliée à une liaison électrique 19a, 19b fixée sur la paroi latérale 4 du récipient 3. La liaison électrique 19a, 19b s'étend jusqu'au voisinage du bord supérieur 20 de la paroi latérale 4 et forme la borne complémentaire 11, 11' du récipient 3 qui est connectable à l'une des bornes 10, 10' de la poignée 1.

Selon le mode de réalisation représenté sur la figure 2, deux liaisons électriques 19a, 19b sont fixées sur la surface externe 14c de la paroi latérale 4 du récipient 3. Les deux liaisons électriques 19a, 19b sont sensiblement rectilignes, perpendiculaires au fond 9 du récipient 3 et adjacentes. La distance entre les liaisons électriques 19a et 19b est de préférence la plus petite possible pour ne pas réduire la puissance maximale transmise. Les liaisons électriques 19a et 19b sont réalisées de façon de réduire les inductances et les résistances électriques. Par exemple, leur longueur est réduite, leur épaisseur est élevée et les boucles sont courtes. Les liaisons électriques 19a et 19b sont les plus proches possibles pour annuler leur inductance respectives (champs magnétique créé). La distance entre les liaisons électriques 19a et 19b est telle que l'inductance L est inférieure à 100 µH pour un courant de 4A (24 Volt). La poignée 1 comprend alors deux bornes 10, 10' connectables aux liaisons électriques 19a, 19b et alignées sensiblement de façon parallèle au fond 9 lorsque la poignée est fixée sur le récipient (figure 1). La poignée peut être ainsi fixée sur le récipient et être réglable en hauteur sur une courte distance.

En variante, les deux liaisons électriques 19a, 19b peuvent être courbes.

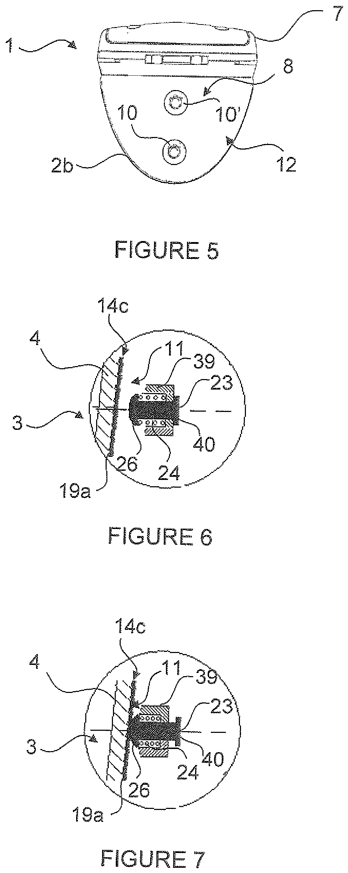

Selon le mode de réalisation représenté sur les figures 3 et 4, chaque liaison électrique 19a, 19b est formée par une partie périphérique 21a, 21b entourant la paroi latérale 4 et une partie intermédiaire 22a, 22b reliant la partie périphérique 21a, 21b à l'une des extrémités 18a, 18b de la bobine 16. Les parties périphériques 21a, 21b sont distantes l'une de l'autre. Dans ce cas, la poignée 1 comprend deux bornes 10, 10' connectables aux parties périphériques 21a, 21b respectives et alignées suivant une direction non parallèle au fond 9 du récipient 3 (figure 5). Dans l'exemple de la figure 5, les deux bornes 10, 10' sont alignées verticalement et de façon perpendiculaire au fond 9 qui est plan et horizontal. Les parties périphériques 21a, 21b sont circulaires. Elles peuvent également être ovoïdes ou autre.

Les parties périphériques 21a, 21b sont séparées par un espace 38 de préférence constant (figure 4). Il peut être variable. Pour les mêmes raisons que celle évoquées précédemment, la distance entre les parties périphériques 21a, 21b est telle que l'inductance L est inférieure à 100 µH pour un courant de 4A (24 Volt).

Une couche d'isolation électrique peut être prévue entre les liaisons électriques 19a, 19b lorsqu'elles se croissent afin d'éviter les contacts.

Les parties périphériques 21a, 21b sont proches du bord 20 du récipient 4. Il est ainsi possible de positionner la poignée 1 sur toute la périphérie de la paroi latérale 4. Aucune position n'est prédéterminée. Ceci est utile lorsque le récipient 3 chauffe. Il n'est pas nécessaire de se déplacer ou de tourner le récipient mal positionné pour fixer la poignée. Les risques de brulure sont évités. De plus, lorsqu'un endroit de la partie périphérique 21a, 21b est sale ou abimé, il est possible de connecter la poignée 1 à un autre endroit.

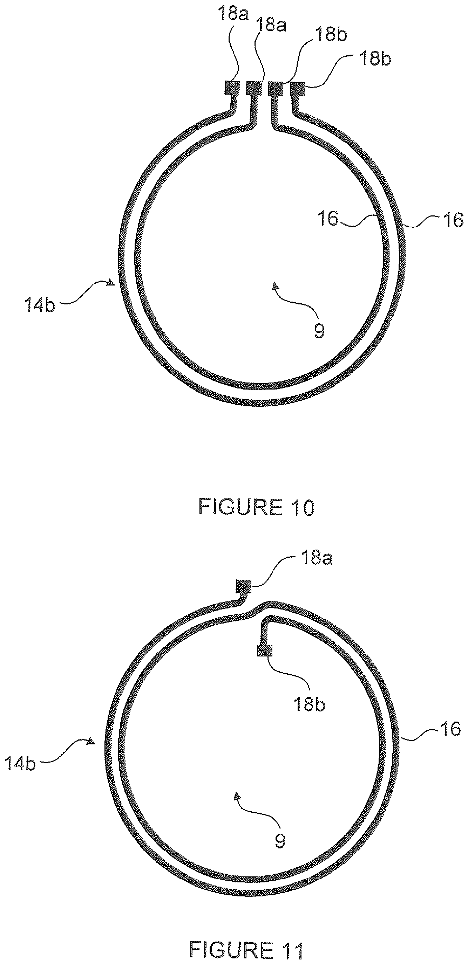

En variante, la bobine 16 peut comprendre plus d'une spire. L'exemple de la figure 11 montre une bobine 16 comprenant deux spires. Une spire permet de récupérer 20 W environ. Deux spires permettent de récupérer 80 W. Quand on a plus d'une spire, la connexion 18b se trouve de préférence à l'intérieur des spires.

Dans un mode de réalisation possible (non représenté), la liaison 19b croise les pistes de la bobine. Une couche d'isolation électrique est prévue entre les liaisons électriques 19b, à l'endroit du croisement, lorsqu'elles se croissent avec la bobine afin d'éviter les contacts électriques. Les extrémités 18a, 18b sont proches pour fermer le plus possible la boucle.

Selon un mode de réalisation possible, correspondant toujours à l'exemple de la figure 11, une première extrémité 18a de la bobine 16 située en périphérie de la bobine est destinée à être reliée à une liaison électrique 19a pour être connectée à une première borne 10 de la poignée 1. Une deuxième extrémité 18b de la bobine 16 est située à l'intérieure de celle-ci (sensiblement proche de la première 2a pour fermer le plus possible la boucle) et est destinée à être connectée à l'une des couches métalliques du récipient 3. De cette façon, cette couche métallique conduit l'électricité jusqu'à un endroit de la paroi latérale 4 où la deuxième borne 10' de la poignée 1 est en contact.

Les bobines sont de préférence concentriques, elles peuvent être superposées à condition d'ajouter une couche d'isolation entre les pistes. Lorsqu'elles sont superposées, l'induction résultante est sensiblement nulle.

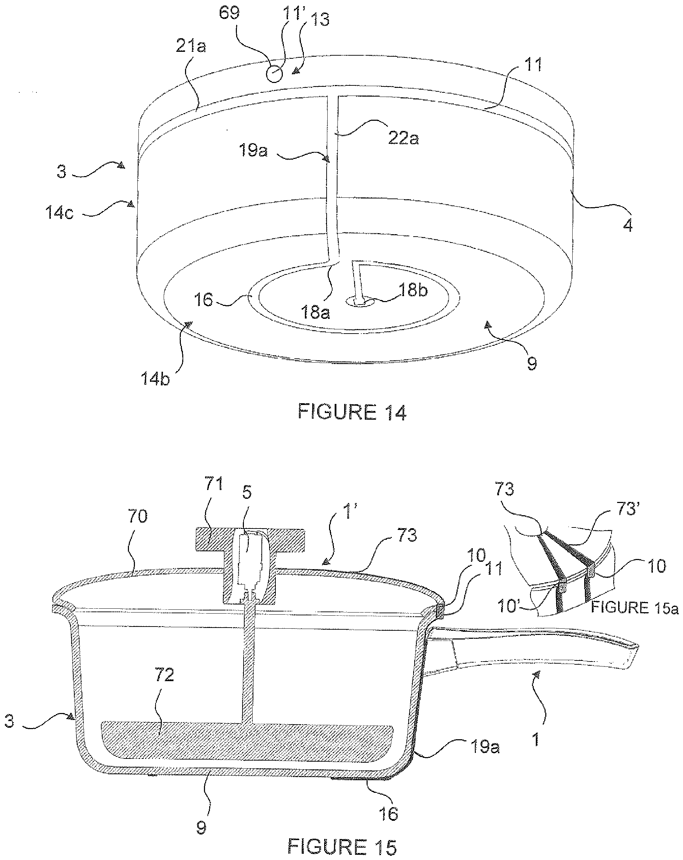

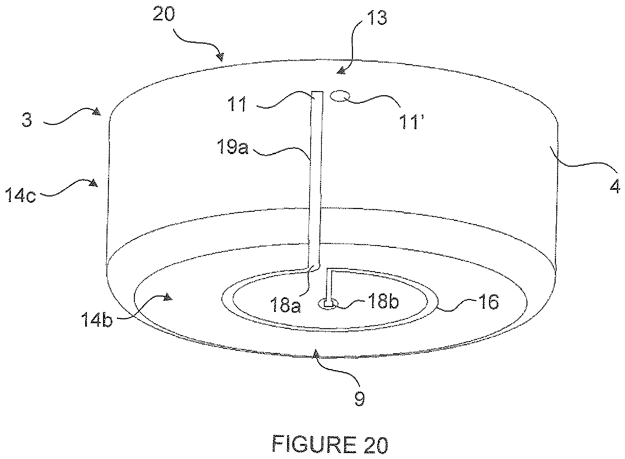

Les modes de réalisation des figures 14 et 20 illustrent deux exemples dans lesquels la deuxième extrémité 18b de la bobine 16 est située à l'intérieure de celle-ci et est connectée à l'une des couches métalliques du récipient 3 de façon à conduire l'électricité jusqu'à un endroit de la paroi latérale 4 formant l'une des bornes 11' du récipient avec laquelle la deuxième borne 10' de la poignée 1 est en contact.

Dans l'exemple de la figure 14, le récipient comprend une bobine 16 sur la surface externe 14b du fond. La bobine 16 comprend une première extrémité 18a reliée à une liaison électrique 19a comprenant une partie périphérique 21a entourant la paroi latérale 4 et une partie intermédiaire 22a reliant la partie périphérique 21a à l'extrémité 18a de la bobine 16. La deuxième borne 11' de la bobine est formée par une ouverture 69 dans la couche de protection externe 68, située à proximité de la partie périphérique 21a. Cette ouverture 69 correspond à une zone sans couche de protection externe 68 de façon à ce que la deuxième borne 10' de la poignée 1 soit en contact avec la couche métallique externe du récipient 3.

La figure 20 illustre un récipient comprenant une bobine 16 sur la surface externe 14b du fond. La bobine 16 comprend une première extrémité 18a reliée à une liaison électrique 19a formant une première borne 11 du récipient. La deuxième borne 11' de la bobine est formée par une ouverture 69 dans la couche de protection externe 68, située à proximité de la première borne 11 et à proximité du bord supérieur du récipient. Cette ouverture 69 correspond à une zone sans couche de protection externe 68 de façon à ce que la deuxième borne 10' de la poignée 1 soit en contact avec la couche métallique externe du récipient 3.

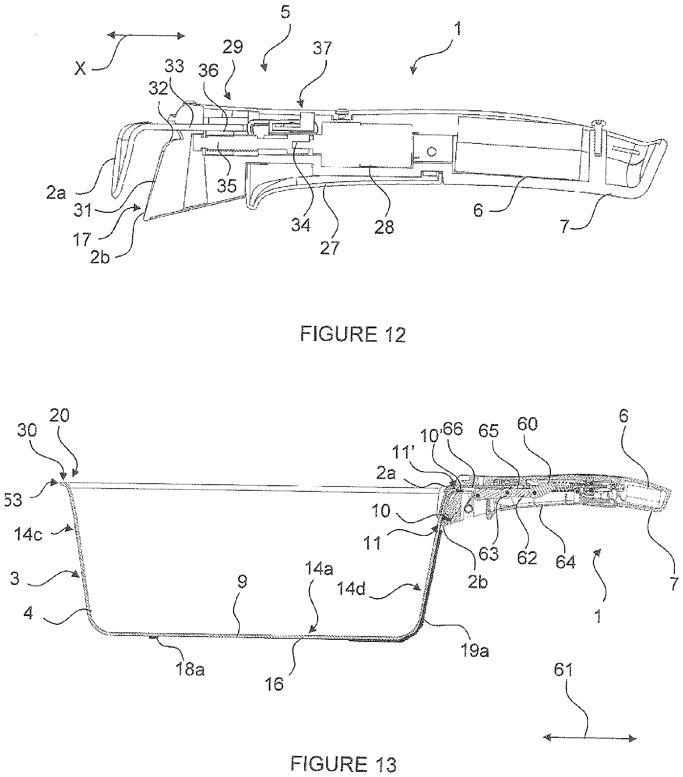

Selon un autre mode de réalisation possible représenté sur la figure 13, la poignée est munie de moyens de fixation mécaniques tels que ceux décrits dans la demande EP-1991098 à titre d'exemple. D'autres moyens de fixation mécaniques sont également utilisables.

Pour déplacer le mors mobile 2a vis-à-vis du mors fixe 2b situé en face, on utilise un coulisseau 60 monté en translation selon la direction longitudinale 61 par rapport au corps 7, et des première et seconde bielles pivotantes 62,63. La seconde bielle agit directement sur le mors mobile 2a. Un bouton de manoeuvre 64 monté basculant sur le corps 7 sollicite la seconde bielle 63 et par là la chaîne articulée 60, 62, 63 via un ergot 65 traversant une lumière de la tige 66 qui se termine par le mors 2a. Davantage de détails sont disponibles dans EP 2007260.

Dans cet exemple, le mors fixe 2b comprend deux bornes 10, 10' dont une borne 10 inférieure destinée à venir en contact avec une première borne complémentaire 11 du récipient formée par une liaison électrique 19a disposée sur la paroi latérale 4 du récipient et une borne supérieure 10' destinée à venir en contact avec l'extrémité 53 du bord recourbé 30 du récipient qui forme alors la deuxième borne complémentaire 11' du récipient. La bobine 16 comprend une extrémité 18a qui est en contact avec une couche métallique formant le récipient. Ainsi, le courant peut traverser cette couche métallique jusqu'à l'extrémité 53 du bord recourbé 30.

La borne 10 inférieure du récipient est positionnée à proximité de la paroi inférieure du corps de préhension 7. Le corps de préhension 7 comprend un logement 54 positionné entre la surface de contact 12 du mors fixe 2b et le mors mobile 2a. Le logement 54 est destiné à recevoir l'extrémité 53 du bord recourbé 30 du récipient. La borne supérieure 10' est disposée dans ce logement 54 de façon à être en contact avec l'extrémité 53 du bord recourbé 30 du récipient.

Ce mode de réalisation qui est valable pour des moyens de fixation mécanique l'est également pour des moyens de fixation électromécaniques.

En variante, le fond 9 peut comprendre plusieurs bobines d'inductance 16 comprenant chacune deux extrémités 18a, 18b. La figure 10 représente le fond 9 d'un récipient 3 comprenant deux bobines d'inductance 16 munie chacune d'une extrémité 18a, 18b destinée à être connectée à une liaison électrique 19a, 19b fixée sur la paroi du récipient 3. L'une des bobines d'inductance 16 est disposée à l'intérieur de l'autre bobine 16. Ces dernières sont sensiblement concentriques. Une bobine 16 formée d'une boucle permet de récupérer 20 W environ.

Dans ce mode de réalisation, la poignée comprend quatre bornes connectables à quatre bornes disposées sur la paroi du récipient (non représenté).

En variante, lorsque le fond 9 comprend deux bobines d'inductance 16, la poignée peut ne comprendre que deux bornes 10, 10' . En positionnant différemment la poignée par rapport au récipient, il est possible de connecter les bornes de la poignée sur l'une ou l'autre des bobines. Les bobines peuvent être disposées en série ou en parallèle. Dans ce cas on positionne les liaisons électriques 19a, 19b et les bornes complémentaires 11, 11' sur la surface du récipient de façon à former seulement deux bornes complémentaires 11, 11'.

En variante, lorsque le récipient comprend quatre bornes, la poignée peut assurer une mise en parallèle ou en série pour obtenir différentes puissances selon les appareils électriques à alimenter. Il peut être prévu une commutation électronique dans la poignée ou un positionnement différent de la poignée sur le récipient.

Le nombre de boucles ou de spires est à adapter en fonction du besoin en énergie du dispositif électrique et/ou électromécanique 5 à alimenter. Un écran d'affichage LCD consomme 100mW et un moteur pour actionner le mors mobile 2a d'un moyen de fixation consomme 6W, par exemple. Une seule boucle récupérant 20W est donc nécessaire.

La bobine 16 peut comprendre un matériau choisi parmi le cuivre, l'argent, l'aluminium ou un composite chargé de ces éléments.

La géométrie de la bobine 16 dépend du matériau, du diamètre et de la section des spires. De préférence, la bobine est située à mi rayon du fond 9 du récipient 3.

A titre d'exemple, la bobine 16 peut être une piste sérigraphiée sur la surface externe du récipient.

La bobine 16 et les liaisons électriques 19a, 19b sont électriquement isolées du reste de la calotte ou récipient 3 grâce à une couche d'isolant électrique disposée, de préférence par dépôt, entre la bobine 16 et la surface externe 14b, 14c du récipient 3 qui est métallique.

Un seul point de contact entre le récipient et la piste n'a pas d'influence car le courant continu à circuler par la bobine. On utilise cela pour simplifier le procès de fabrication. Cette isolation ne doit pas nécessairement être infinie. La valeur de résistance doit être suffisamment grande pour que le courant circule principalement par la piste et non par le récipient. Il faut que la résistance du récipient soit supérieure à la résistance de la piste et à la charge. En général la résistance de la charge est bien supérieure à la résistance de la piste. La résistance équivalente de la charge pour une puissance de 6 W sous 24 V est de 100 ohms donc des valeurs supérieures à 100 ohms sont nécessaires, idéalement infinie.

Selon un mode de réalisation possible, les bornes 10, 10' de la poignée 1 sont des plots de contact électrique 23 repoussés par des moyens de rappel élastique 24, comme illustré sur les figures 6 et 7. Ils permettent de limiter la résistance de contact à moins de 100mOmhs et de préférence à moins de 10mOmhs, améliorant ainsi notablement le rendement.

Chaque plot de contact électrique 23 présente une forme allongée et une section circulaire. Chaque plot de contact électrique 23 présente une section d'au moins 0,75mm² pour résister à un courant de 0,5A au moins, et de préférence de 3A.

Chaque plot de contact électrique 23 comprend une tête 26 à l'une de ses extrémités qui est destinée à venir en contact avec la borne 11, 11' du récipient 3 et plus précisément avec la liaison électrique 19a, 19b du récipient 3. Cette tête 26 est de préférence de forme arrondie ou convexe.

Chaque plot de contact électrique 23 est maintenu dans un support 39 de forme cylindrique et est mobile en translation par rapport au support 39 entre une positon déployée dans laquelle le plot de contact électrique 23 n'est pas en contact avec une borne (figure 6) et une position rétractée dans laquelle le plot de contact électrique 23 est en contact et en compression contre une borne 11, 11' du récipient 3 (figure 7).

Le support 39 comprend un logement dans lequel est disposé un ressort 24 entourant la partie centrale du plot. Le ressort 24 exerce une force vers l'extérieur et contre la partie inférieure de la tête 26 du plot de contact électrique 23. Ce ressort 24 est en appui contre le fond du support 39. Le plot de contact électrique 23 comprend un pied 40 à son autre extrémité et qui est disposé à l'extérieur du support 39. Le pied 40 vient en butée contre la surface externe du support 39 lorsque le plot 23 est en position déployée (figure 6). La tête 26 du plot est également disposée à l'extérieure du support 39. La tête 26 est en butée contre la surface avant externe du support 39 lorsque le plot 23 est en position contractée (figure 7). Ainsi, le plot 23 est mobile par rapport au support 39 tout en étant maintenu par ce dernier.

L'ensemble formé par le plot 23, le support 39 et le ressort 24 est porté par le mors fixe 2b de la poignée, c'est-à-dire par la partie avant 17 du corps de préhension 7. La tête 26 du plot fait saillie sur la surface 12 du mors fixe 2b lorsque le plot 23 est en position déployée (figure 6).

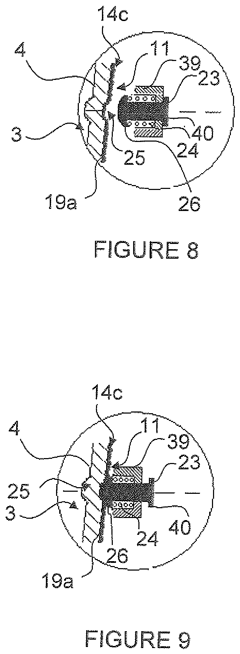

Selon un autre mode de réalisation possible représenté sur les figures 8 et 9, chaque liaison électrique 19a, 19b du récipient 3 comprend au moins une borne de forme concave 25 adaptée à recevoir l'extrémité 24 d'un des plots de contact électrique 23 prévus sur la poignée 1. La borne de forme concave 25 est formée par un bossage dans la paroi latérale 4 du récipient 3. La tête 26 du plot 23 présente une forme convexe complémentaire de celle de la borne de forme concave 25. Les bornes de forme concave 25 permettent un meilleur contact électrique et une meilleure fixation de la poignée 1. En effet, la tête 26 des plots 23 peut se loger dans la borne de forme concave 25, évitant de former une protubérance sur la surface de contact 12 du mors fixe 2b et un point d'appui supplémentaire. Ceci permet de conserver une grande surface de contact entre le mors et la paroi. De cette façon, quasiment toute la surface du mors fixe 2b est en appui contre la surface externe 14c de la paroi latérale 4.

Dans le cas de l'exemple de la figure 2, chaque liaison électrique 19a, 19b comprend une seule borne de forme concave 25 disposée à proximité du bord 20 du récipient 3. La borne de forme concave 25 forme la borne 11, 11' du récipient 3.

Dans le cas de l'exemple de la figure 4, chaque partie périphérique 21a, 21b des liaisons électriques 19a, 19b comprend au moins une borne de forme concave 25 et de préférence plusieurs bornes de forme concave 25 réparties sur la périphérie du récipient. Ceci permet d'obtenir plusieurs positions de fixation de la poignée possibles.

Lorsque le récipient 3 est posé sur une plaque d'induction, l'inducteur de la plaque d'induction génère un flux magnétique qui est capté par le récipient 3 qui chauffe. Une partie de l'énergie est récupérée par la bobine 16 et utilisé pour alimenter un dispositif électrique et/ou électromécanique et/ou un moyen de stockage de l'énergie électrique. La bobine est le plus mince possible pour ne pas perturber la chauffe du récipient 3. L'épaisseur et la largeur de la bobine de cuivre doivent être les plus fines possibles pour ne pas avoir des courants de circulations à l'intérieur. Le courant ainsi induit dans cette bobine est alternatif avec une fréquence en général d'environ 25 KHz. Un redresseur et des moyens de filtrage peuvent être prévus. Un condensateur pour éviter les pertes réactives (compensant l'inductance travaillant à la résonance) peut aussi être prévu. Un régulateur de tension peut aussi être prévu. Ces éléments sont logés dans la poignée 1.

Comme représenté sur la figure 12, le dispositif électrique et/ou électromécanique 5 peut comprendre les moyens de fixation 2 de façon à obtenir des moyens de fixation motorisés.

La poignée 1 peut comprendre des moyens de commande 27 pour commander le fonctionnement et l'arrêt du dispositif électrique et/ou électromécanique 5. Ce dernier peut comprendre un moteur 28 et un dispositif d'actionnement 29 entrainé par le moteur 28. Le dispositif d'actionnement 29 est adapté à actionner le mors mobile 2a.

En variante, les moyens de fixation peuvent être mécaniques et comprendre des crochets solidaires de la poignée 1 et destinés à s'insérer dans des orifices prévus sur la paroi latérale du récipient. D'autres moyens de fixation sont également possibles comme un système vis-écrou, par exemple. Dans ce cas, le dispositif électrique et/ou électromécanique 5 peut comprendre des moyens d'affichage ou une brosse actionnée par le moteur 28, par exemple.

Les moyens de fixation peuvent être fixés à la paroi latérale 4 du récipient 3 ou à une autre partie du récipient telle un étrier solidaire de la paroi latérale.

Le corps de préhension 7 présente une forme allongée et s'étend suivant une direction longitudinale (X) .

En variante, les deux mors 2a, 2b formant pince peuvent être mobiles suivant la direction longitudinale (X) et en sens opposé.

La poignée est prévue pour être fixée de façon amovible à un récipient 3, du type ustensile culinaire (casserole, poêle,...). La paroi latérale 4 peut présenter un bord recourbé 30 sur sa partie supérieure qui forme un rebord verseur. L'exemple des figures 3 et 12 est donné pour une paroi latérale 4 comprenant un bord recourbé 30 vers l'extérieur. Le mors fixe 2b est formé par le corps de préhension 7. Plus précisément, le corps de préhension 7 comprend une partie avant 17 ayant une surface de contact qui est destinée à venir en contact avec la surface externe 14c de la paroi latérale 4 du récipient 3. La surface de contact de la partie avant 17 du corps présente une forme complémentaire de celle de la surface externe 14c de la paroi latérale 4 et plus précisément de la surface externe du bord recourbé 30 du récipient 3. Plus particulièrement, la surface de contact de la partie avant 17 du corps de préhension 7 présente une portion plate 31 prolongée par une portion recourbée 32 vers l'intérieur du corps de préhension 7. Le corps de préhension 7 est de préférence en bakélite. Lorsque la poignée amovible 1 est fixée sur le récipient 3, cette dernière est sensiblement perpendiculaire à un plan tangent à la paroi latérale 4 du récipient 3. Le mors mobile 2a présente une forme complémentaire de celle de la surface interne 14d de la paroi latérale et plus précisément de la surface interne du bord recourbé 30 du récipient 3.

En variante, les deux mors 2a, 2b formant pince de la poignée 1 peuvent être adaptés pour être fixés sur une paroi latérale droite sans bord recourbé, telle que représentée sur les figures 2 et 4.

Le mors mobile 2a est prolongé par un bras 33 coulissant dans une glissière prévue dans le corps de préhension 7. Le bras 33 s'étend selon la direction longitudinale (X). Il présente une forme aplatie.

En variante, le moteur 28 peut être remplacé par un électroaimant, un servomoteur, un vérin pneumatique ou un vérin électrique, par exemple.

Le moteur électrique 28 est alimenté en courant par les moyens de stockage d'énergie électrique 6 et/ou la bobine 16. Le moteur électrique 28 présente un arbre 34 entraîné en rotation. De manière préférée, le moteur électrique 28 comprend un réducteur. La vitesse de rotation du moteur électrique 28 est d'au moins de 340 tours par minute, et de préférence de 360 tours par minute. Le couple du moteur est d'au moins de 80 mN/m et de préférence de 100 mN/m.

Le dispositif d'actionnement 29 comprend des premiers moyens de transmission 35 adaptés à transmettre le mouvement de rotation du moteur électrique 28 à des deuxièmes moyens de transmission 36 solidaires du mors mobile 2a pour entraîner le déplacement en translation du mors mobile 2a entre la position d'ouverture et la position fermée.

Selon une variante possible, les premiers moyens de transmission 35 comprennent une tige filetée 35 entraînée en rotation par le moteur électrique 28. Les deuxièmes moyens de transmission 36 comprennent un élément mobile 36 muni d'un orifice fileté s'engageant dans la tige filetée 35. La rotation de la tige filetée 35 entraîne le déplacement en translation de l'élément mobile 36 le long de celle-ci et par conséquent le déplacement du mors mobile 2a entre la position ouverte et la position fermée. La tige filetée 35 peut être une vis filetée sans fin. La tige filetée 35 est reliée à l'arbre 34 du moteur électrique 28. La tige filetée 35, l'arbre 34 et les mors 2a, 2b formant pince mobiles sont sensiblement alignés selon la direction longitudinale (X). La tige filetée 35 est mobile en rotation et immobile en translation.

La tige filetée 35 et l'orifice fileté de l'élément mobile 36 présentent un pas compris entre 0,65 mm et 0,85 mm pour bloquer le déplacement du mors mobile 2a lorsqu'il est en position fermée. De préférence, le pas est de 0,75 mm.

A titre d'exemple, pour une course du mors mobile 2a de 10 mm entre la position fermée et la position ouverte, correspondant à un déplacement transversal de l'élément mobile 36 le long de la tige filetée 35 de 10 mm, la vitesse du moteur est de 360 tours par minute, et le pas de la tige filetée 35 et de l'orifice fileté de l'élément mobile 36 est de 0,75 mm. Cette configuration permet de bloquer le déplacement du mors mobile 2a lorsqu'il est en position fermée de façon efficace. L'élément mobile 36 peut être un écrou par exemple.

En variante, le dispositif d'actionnement 29 peut comprendre un système à engrenages (pignon / crémaillère ou des roues coniques ou des cylindriques), un système à bille (vis à bille), des poulies, une courroie, une roue dentée, une chaine, une transmission par friction ou un système bielle manivelle / came.

Le mors mobile 2a peut être en inox, par exemple. Le mors mobile 2a est prolongé par le bras 33 rectiligne formant un coulisseau et s'étendant à l'intérieur du corps de préhension 7. Ce bras 33 coulisse dans un logement prévu dans le corps de préhension 7 entre la position fermée et la position ouverte du mors mobile 2a. Les deuxièmes moyens de transmission 36 et plus précisément l'élément mobile 36 est solidaire de ce bras 33. Dans les exemples donnés, l'élément mobile 36 est fixé au bras 33.

La poignée amovible 1 peut comprendre un commutateur 37 accessible depuis l'extérieur du corps de préhension 7 pour sélectionner manuellement le sens de rotation du moteur électrique 28. Un premier sens de rotation est dédié à l'ouverture du mors mobile 2a. Un deuxième sens de rotation opposé est dédié à la fermeture du mors mobile 2a. Par exemple, lorsque le sens de rotation dédié à la fermeture du mors mobile 2a est préalablement sélectionné avec le commutateur 37, une pression sur le bouton de commande 27 entraîne la rotation du moteur électrique 28 dans ce sens de rotation et la fermeture du mors mobile 2a.

En variante, la poignée amovible 1 peut comprendre un capteur pour détecter la présence de la poignée 1 contre ou à proximité immédiate du récipient 3. L'activation du commutateur peut entraîner la fermeture automatique du mors mobile 2a sans intervention de l'utilisateur.

Selon un mode de réalisation possible, le dispositif électrique et/ou électromécanique 5 peut comprendre des moyens autres que les moyens de fixation. Il peut comprendre une brosse rotative reliée à un arbre entrainé par le dispositif électromécanique ou un agitateur pour brasser les aliments, les écraser ou les mixer, par exemple. Dans ce mode de réalisation, la poignée 1 comprend des moyens de fixation qui peuvent être actionnés manuellement ou électromécaniquement.

Selon un mode de réalisation possible (non représenté), le dispositif électromécanique peut comprendre une came entrainée en rotation par la tige filetée. La came est solidaire de la tige filetée et est disposée à proximité de l'extrémité avant de la tige filetée. La came est logée dans un logement prévu dans le corps de préhension 7. Le logement débouche sur l'extérieur par la face supérieure du corps de préhension 7. La came est entraînée en rotation par le moteur électrique 28 de façon à être mobile entre une position de repos dans laquelle la came est logée à l'intérieur du logement et une position activée dans laquelle la came fait saillie sur la face supérieure du de la poignée 1. Dans la position de repos, l'axe principal de la came est sensiblement parallèle au plan horizontal de la poignée 1. Dans la position activée, l'axe principal de la came est sensiblement perpendiculaire au plan horizontal de la poignée 1 et orienté vers le haut lorsque la poignée 1 est fixée au récipient 3 posé sur un support horizontal. Dans cette position activée, la came fait saillie sur la face supérieure de la poignée 1 et permet de soulever plus ou moins le rebord d'un couvercle posé sur le récipient 3 pour régler le débit de la vapeur lorsque des aliments sont chauffés dans le récipient 3.

En variante, le dispositif électromécanique peut comprendre une roue dentée entrainée en rotation par la tige filetée qui est elle-même entrainée par le moteur électrique 28 (non représenté). La roue dentée est solidaire de la tige filetée et est disposée à proximité de l'extrémité avant de la tige filetée. La roue dentée est logée dans un logement prévu dans le corps de préhension 7. Le logement débouche sur l'extérieur par la face supérieure du corps de préhension 7. La roue dentée est entraînée en rotation par le moteur électrique 28 de façon à entraîner une crémaillère disposée sur le couvercle. La crémaillère entraîne en rotation une pale permettant de brasser des aliments (purée, poêlée de légume, soupe par exemple) disposés dans le fond du récipient 3.

En variante, la poignée 1 peut comprendre des moyens de soulèvement permettant de soulever un couvercle posé sur un récipient (non représenté).

Le dispositif électrique et/ou électromécanique 5 peut comprendre des moyens d'affichage alimentés par les moyens de stockage d'énergie électrique 6 et/ou la bobine 16. Ces moyens d'affichage peuvent comprendre un écran à cristaux liquides par exemple, pour permettre, entre autre, d'afficher l'autonomie de la source d'énergie électrique, l'heure, le temps de cuisson restant ou la température du récipient. L'écran à cristaux liquides est disposé sur la face supérieure de la poignée 1.

Le dispositif électrique et/ou électromécanique 5 peut comprendre des moyens de mesure tel un capteur de température ou un dispositif pour déterminer le poids des aliments contenus dans le récipient 3, par exemple. La température ou le poids peuvent être affichés sur l'écran à cristaux liquides. La poignée 1 peut comprendre une horloge et un chronomètre (« timer »). Les moyens de mesure sont alimentés par les moyens de stockage d'énergie électrique 6 et/ou la bobine 16 et sont reliés au circuit électronique.

Le dispositif électrique et/ou électromécanique 5 peut comprendre des moyens de communication sans fil pour recevoir et/ou transmettre des informations à une station de base. Les moyens de communication peuvent comprendre un émetteur et/ou un récepteur radiofréquence alimentés par les moyens de stockage d'énergie électrique 6 et/ou la bobine 16 et sont reliés au circuit électronique. Par exemple, la station de base peut transmettre des recettes de cuisine à la poignée 1. Ces dernières sont affichées sur un écran à cristaux liquides. La poignée 1 peut transmettre des signaux représentatifs de la température du récipient à la station de base.

Le dispositif électrique et/ou électromécanique 5 peut comprendre des moyens d'éclairage, telle une diode par exemple, pour éclairer les aliments dans le récipient 3. Les moyens d'éclairage sont disposés sur la face supérieure de la poignée 1 et à l'avant de celui-ci. Les moyens d'éclairage sont alimentés par les moyens de stockage d'énergie électrique 6 et/ou la bobine 16.

Les variantes ci-dessus sont possibles pour une poignée fixée de manière permanente au récipient 3 ou une poignée amovible de celui-ci.

Une carte ou circuit électronique peut gérer le sens de rotation du moteur, la détection du serrage du mors 2a mobile, l'affichage d'information sur l'état de la poignée 1 (ouvert/fermée, autonomie, problème particulier), et la charge des batteries, par exemple.

L'invention concerne également un procédé pour fabriquer le récipient 3 de l'article culinaire. Ce récipient 3 est formé d'au moins une couche métallique et est adapté pour recevoir des aliments. L'une des couches comprend du fer. Le procédé comprend une étape de mise en forme creuse du récipient 3, de manière qu'elle présente alors un fond 9 et une paroi latérale 4 qui se dresse en périphérie du fond 9.

Après l'étape de mise en forme creuse, au moins une bobine 16 est fixée sur la surface externe 14b ou interne 14a du fond 9 du récipient 3.

Le procédé comprend également une étape de fixation de liaisons électriques 19a, 19b sur la surface externe 14c ou interne 14d de la paroi du récipient 3 et éventuellement sur une portion de la surface externe 14b ou interne 14a du fond 9. Cette étape est réalisée après l'étape de fixation de la bobine 16.

Les liaisons électriques 19a, 19b et la bobine 16 sont disposées sur la même surface du récipient, externe ou interne.

De préférence, après l'étape de mise en forme creuse, une couche d'isolant électrique et déposée sur la surface externe 14b ou interne 14a du fond 9 du récipient 3 et au moins une bobine 16 est fixée sur cette couche d'isolant électrique.

Les liaisons électriques 19a, 19b et la bobine 16 sont éventuellement recouvertes d'une autre couche d'isolant électrique.

De préférence, la bobine 16 est fixée par dépôt. Ce dépôt peut être réalisé par sérigraphie, tampographie, projections thermiques, décalcomanie ou frittage laser.

En variante, la fixation de la bobine 16 peut être réalisée par l'insertion mécanique de fils conducteurs isolés.

Le récipient seul pourrait être revendiqué, étant inventif à lui seul.

En variante et comme illustré sur la figure 15, l'article culinaire peut comprendre un couvercle 1' et une poignée 71 comprenant le dispositif électrique et/ou électromécanique 5 entrainant un agitateur 72. Comme représenté sur la figure 15a, le couvercle 1' comprend deux bornes 10, 10' reliées au dispositif électrique et/ou électromécanique 5 par une liaison électrique 73 prévue sur le couvercle 70. Les deux bornes 10, 10' sont connectables à deux bornes 11, 11' du récipient (figure 15a) .

En variante et comme illustré sur la figure 16, l'article culinaire peut comprendre un accessoire lumineux 1" posé de façon stable (et de préférence séparable) autour de l'ouverture supérieur du récipient, à la manière d'un disque, et comprenant des LED pour éclairer l'intérieur du récipient. L'accessoire lumineux 1" comprend deux bornes 10, 10' reliées au LED. Les deux bornes 10, 10' sont connectables à deux bornes 11, 11' du récipient. Le courant pour alimenter les LED blanches pour éclairer suffisamment est de 2W par exemple (>100mA) .

Les exemples qui précèdent indiquent que l'ustensile de cuisine, accessoire du récipient et porteur du dispositif électrique et/ou électromécanique 5 sera utilitaire pour ce récipient (éclairage, brassage, élément pour porter...). Il aura, en lui-même, une fonction autre que le (seul) chauffage électrique ou par induction du récipient. De préférence, il s'agira d'un ustensile de cuisine pouvant être pris en main. On pourra alors notamment le déplacer et/ou le tenir pour le faire fonctionner, le porter et/ou porter le récipient grâce à lui.

De ce qui précède, on aura aussi compris que cet ustensile de cuisine 1,1',1" et le récipient, de préférence :
- comprendront respectivement :
   * au moins une borne de connexion 10, 10' reliée au dispositif électrique et/ou électromécanique 5, et
   * une borne complémentaire 11, 11' connectable électriquement avec la borne de connexion et reliée à la bobine 16,
- et seront adaptés pour que le premier soit porté de façon stable par le second en étant alors en contact par lesdites bornes de connexion et complémentaire.

A noter encore qu'on préfèrera donc aussi :
- que l'ustensile retenu comprenne des moyens de fixation 2 connectables au récipient et déconnectables de celui-ci,
- et que ces moyens de fixation 2 comprennent une surface de contact 12 adaptée à venir en contact avec la surface de contact complémentaire 13 du récipient afin d'assurer une fixation de l'ustensile sur le récipient, ladite surface de contact 12 portant au moins une dite borne de connexion 10, 10'.

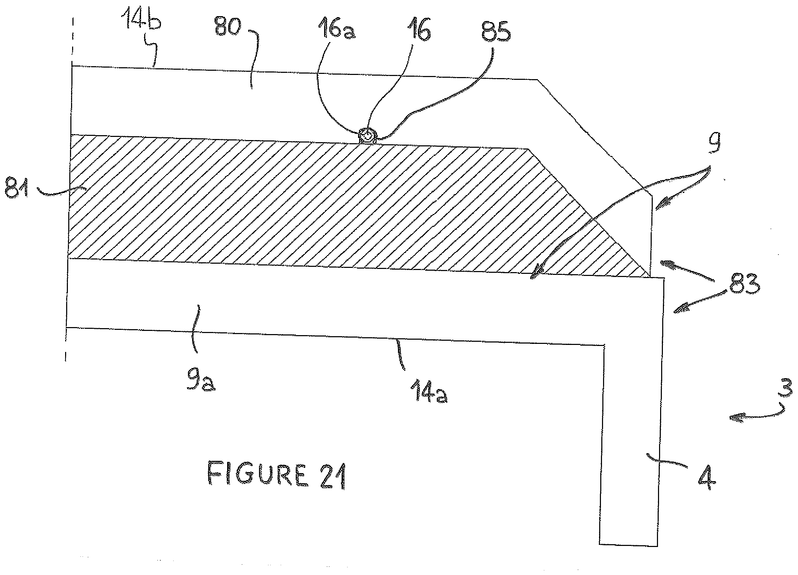

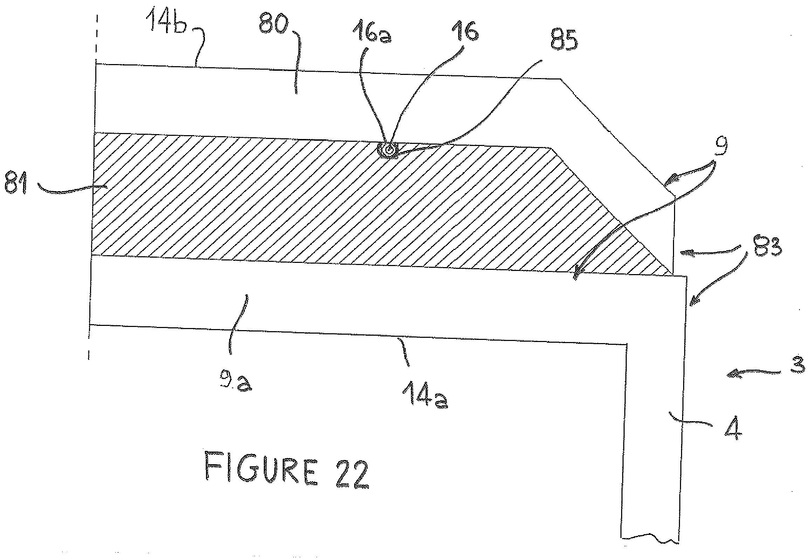

Figs.21,22 le fond 9 du récipient 3 comprend un insert 80 en un métal magnétisable, tel ferromagnétique.

Cet insert est fixé à une couche métallique malléable 81 du substrat 83. La couche 80 peut être en aluminium.

De façon complémentaire ou alternative, l'insert 80 sera plus dur que la couche malléable 81 à laquelle il sera donc fixé.

Cet insert (Fig.21) ou la couche malléable (Fig.22) présente une gorge 85 dans laquelle est disposée la bobine 16.

La bobine est entourée d'une couche d'isolant électrique 16a.

Les couches de fond 9a,81 et 80 du substrat 83 métallique ont été ici fixées entre elles par frappe à à chaud.

La paroi 4, continuité périphérique de la couche 9a du fond, a été obtenue par emboutissage.

La gorge 85 entoure étroitement la bobine qui est donc de préférence isolée. Du fait de la fabrication sous pression, la gorge 85 peut être quasiment refermée à l'interface entre les couches 80-81, et cela d'autant plus avec une couche 81 malléable qui aura fluée lors de la fabrication, y compris potentiellement en remplissant une partie au moins de la gorge 85 fig.21. Ceci figera bien, la position de la bobine. Fig.22, le métal malléable 81 a fait quasiment épouser au métal la forme de la bobine 16 isolée. La gorge n'est presque plus visible.

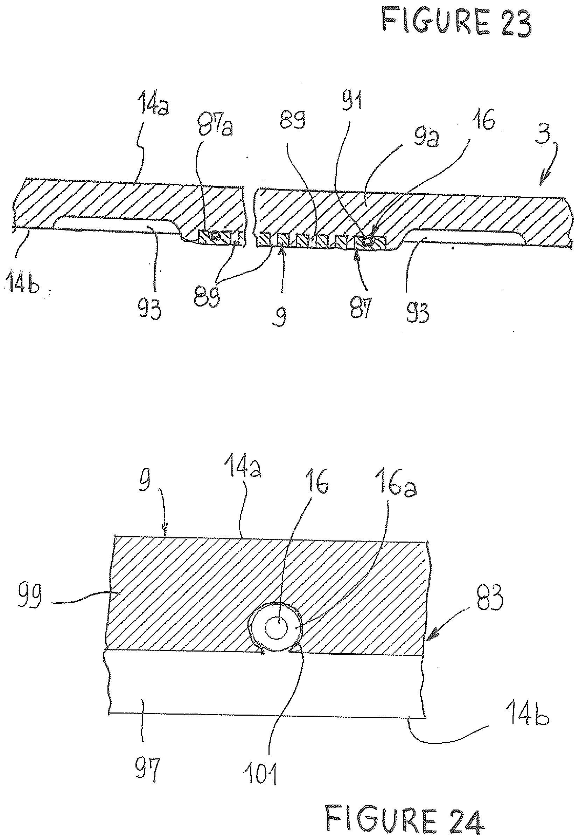

Fig.23, le fond 9 du récipient 3 comprend un insert 87 en un métal plus dur que la couche métallique malléable de la partie 9a de ce fond qui se prolonge latéralement (non représenté) par la paroi latérale du récipient (comme figs.21,22). L'insert 87 est de préférence magnétisable (compatibilité chauffage par induction).

Par pression (frappe par exemple), l'insert 87 a été noyé dans le métal plus malléable de la partie 9a. A travers des passages 89 de l'insert 87 cette couche plus malléable a flué. Ainsi, les deux couches 87 et 9a viennent sensiblement de niveau en périphérie et aux débouchés des passages 89.

Dans la face interne 87a de l'insert 87 une gorge 91 entoure étroitement la bobine 16 qui est donc de préférence isolée. Du fait de la fabrication sous pression, la gorge 85 peut être quasiment refermée à l'interface entre les couches 9a-87. Le métal malléable de la partie 9a remplit la gorge 85.

Des empreintes concaves 93 marquées dans la paroi extérieure 95 de la partie 9a peuvent aussi renforcer le fond.

Figure 24, le fond 9 du récipient comprend une structure de substrat 83 multicouches. La couche extérieure 97 (qui vient en appui sur la source de chauffage ou le plan de travail) est magnétisable, ici ferromagnétique. Intimement liée à cette couche extérieure 97 (bonded en anglais) se trouve une couche métallique intérieure 99, par exemple en acier inox, en cuivre ou en aluminium. En 14a se trouve la surface qui peut être en contact avec les aliments, dans le récipient.

L'une des couches comporte à nouveau une gorge 101 dans laquelle la bobine 16, de préférence isolée par 16a, est disposée. Il peut s'agir d'un colaminé. Située à l'interface entre les couches 97,99, la gorge 101 est ici presque fermée, suite au procédé de fabrication adopté.

Concernant ce procédé pour fabriquer le récipient pourvu de la bobine 16, il sera de préférence selon l'un des deux suivants.
1) En premier lieu, si la bobine est noyée dans la partie de fond du récipient du substrat métallique 83, on conseille ce qui suit :
   - a) on met en forme creuse le substrat, de manière qu'il présente alors ledit fond 9 et la paroi latérale 4 qui se dresse en périphérie de ce fond,
   - b) et :
      * soit on noie dans ce substrat la bobine 16 (de préférence isolée) lors de cette mise en forme creuse (cas 1.1),
      * soit, avant ou après l'étape a), on interpose une telle bobine entre deux couches métalliques électriquement conductrices que le substrat comprend alors, puis on noie cette bobine dans ce substrat (cas 1.2).

   Le cas 1.1 pourra typiquement être un moulage. Le cas 1.2 pourra typiquement être une frappe, un emboutissage, colaminage...
   Dans ces solutions où la bobine est noyée dans le substrat 83 (voir par exemple figs.21-24) on recommande de lier entre elles lesdites deux couches métalliques électriquement conductrices (9a-87 fig.23 ou 97-99 fig.24), sans adhésif collant, par déformation et/ou liaison métallique physico-chimique.
   De préférence, on aura donc interposée une couche électriquement isolante, gaine 16a ou dépôt d'un isolant électrique, entre la bobine 16 et la ou les couches métalliques adjacentes.
2) En alternative, avec une bobine de surface (comme fig.2 ou 4), plaquée contre le substrat 83 (avec a priori isolant interposé), on préférera, après ou avant l'étape de mise en forme creuse du récipient (typiquement par emboutissage), venir fixer au moins la/les bobine 16 sur la surface externe 14b ou interne 14a du fond 9 de ce récipient.

Dans ce cas, on conseille de fixer la bobine par dépôt (tampographie, sérigraphie...) .

## Revendications

1. Article culinaire compatible avec un chauffage par induction et comprenant :
- un récipient (3) adapté à recevoir des aliments et comprenant un substrat métallique comportant un fond (9) magnétisable et une paroi latérale (4) se dressant en périphérie du fond (9) dans son prolongement, le fond (9) présentant une surface interne (14a) recevant les aliments et une surface externe (14b) adaptée à reposer sur un moyen de chauffage par induction (15) externe,
- un dispositif électrique et/ou électromécanique (5);
- au moins une bobine (16) générant de l'électricité à partir d'un flux magnétique produit par le moyen de chauffage par induction pour alimenter le dispositif électrique et/ou électromécanique ; et,
- un ustensile de cuisine, accessoire du récipient, tel une poignée ou un couvercle, qui comprend le dispositif électrique et/ou électromécanique (5),
**caractérisé en ce que** la bobine (16) est disposée à l'endroit du fond (9) :
- soit sur la surface interne (14a) ou externe (14b) du fond (9) du substrat métalique du récipient (3),
- soit noyée dans ledit substrat métallique, au sein :
* soit d'un matériau métallique moulé,
* soit de plusieurs couches métalliques liées entre elles, sans adhésif collant, par déformation et/ou liaison métallique physico-chimique,
**en ce que** l'ustensile de cuisine et le récipient :
- comprennent respectivement :
* au moins une borne de connexion (10, 10') reliée au dispositif électrique et/ou électromécanique (5), et
* une borne complémentaire (11, 11') connectable électriquement avec la borne de connexion et reliée à la bobine (16),
- et sont adaptés pour que le premier soit porté de façon stable par le second en étant alors en contact par lesdites bornes de connexion et complémentaire.
et **en ce que** la bobine (16) comprend une boucle ouverte et deux extrémités (18a, 18b) chacune reliée à une liaison électrique (19a, 19b) fixée à la paroi du récipient (3), la liaison électrique (19a, 19b) s'étendant jusqu'au voisinage du bord supérieur (20) de la paroi latérale (4) et formant la borne complémentaire (11, 11') du récipient (3).

2. Article culinaire selon la revendication 1, **caractérisé en ce que** le fond comprend :
- une structure de substrat multicouches,
- et/ou au moins :
* une empreinte de rigidification,
* ou un insert en un métal magnétisable qui est fixé à une couche métallique malléable du substrat et/ou qui est plus dur que cette couche malléable.

3. Article culinaire selon l'une au moins des revendications précédentes, **caractérisé en ce que** la bobine est noyée dans le substrat métallique où elle est entourée d'une couche électriquement isolante qui la sépare dudit substrat, lequel est électriquement conducteur.

4. Article culinaire selon l'une au moins des revendications précédentes, **caractérisé en ce que** la bobine (16) est disposée à l'extérieur du substrat métallique duquel elle est séparée par une couche électriquement isolante.

5. Article culinaire selon l'une au moins des revendications précédentes, **caractérisé en ce que** la bobine (16) est disposée entre deux couches métalliques dont une couche à base d'aluminium et une couche à base d'acier inoxydable ferritique comprenant la surface externe (14b) du fond (9).

6. Article culinaire selon l'une au moins des revendications 1 à 5, **caractérisé en ce qu'**il comprend une poignée (1) fixée au récipient (3) pour la préhension de l'article culinaire et comprenant:
- des moyens de fixation (2) connectables au récipient (3) et déconnectables de celui-ci,
- au moins une borne de connexion (10, 10') reliée au dispositif électrique et/ou électromécanique (5) et connectable électriquement avec au moins une borne complémentaire (11, 11') prévue sur le récipient (3) et reliée à la bobine (16).

7. Article culinaire selon la revendication 6, **caractérisé en ce que** les moyens de fixation (2) comprennent une surface de contact (12) adaptée à venir en contact avec une surface de contact complémentaire (13) prévue sur le récipient (3) afin d'assurer la fixation de la poignée (1) sur le récipient (3), ladite surface de contact (12) des moyens de fixation (2) portant au moins une borne de connexion (10, 10').

8. Article culinaire selon la revendication 1, **caractérisé en ce que** :
- l'ustensile comprend des moyens de fixation (2) connectables au récipient (3) et déconnectables de celui-ci, et,
- les moyens de fixation (2) comprennent une surface de contact (12) adaptée à venir en contact avec une surface de contact complémentaire (13) du récipient (3) afin d'assurer une fixation de l'ustensile (1) sur le récipient (3), ladite surface de contact (12) des moyens de fixation (2) portant au moins une dite borne de connexion (10, 10').

9. Article culinaire selon la revendication 6, **caractérisé en ce que** les moyens de fixation (2) comprennent deux mors (2a, 2b) formant pince mobiles l'un par rapport à l'autre pour fixer la poignée (1), l'un des deux mors (2a, 2b) comprenant au moins deux bornes (10, 10').

10. Article culinaire selon la revendication 9, **caractérisé en ce que** les deux mors (2a, 2b) pincent la paroi (4) du récipient (3) sur laquelle est disposée au moins une borne complémentaire (11, 11'), chaque borne (10, 10') de la poignée (1) étant en contact avec cette borne complémentaire (11, 11').

11. Article culinaire selon la revendication 9 ou 10, **caractérisé en ce que** les deux mors (2a, 2b) formant pince comprennent un mors fixe (2b) et un mors mobile (2a) par rapport au corps de préhension (7), les bornes (10, 10') étant disposées sur le mors fixe (2b).

12. Article culinaire selon l'une quelconque des revendications 4 à 10, **caractérisé en ce que** la ou les bornes de connexion (10, 10') sont des plots de contact électrique (23) repoussés par des moyens de rappel élastique (24), pour limiter la résistance de contact à moins 100mOmhs, et de préférence à moins de 10mOmhs.

13. Article culinaire selon la revendication 1, **caractérisé en ce que** :
- les deux liaisons électriques (19a, 19b) sont sensiblement rectilignes, perpendiculaires au fond (9) du récipient (3) et adjacentes, et
- la poignée (1) comprend deux bornes (10, 10') connectables auxdites liaisons électriques (19a, 19b) et alignées sensiblement de façon parallèle au fond (9).

14. Article culinaire selon la revendication 13, **caractérisé en ce que** :
- chaque liaison électrique (19a, 19b) est formée par une partie périphérique (21a, 21b) entourant la paroi et une partie intermédiaire (22a, 22b) reliant la partie périphérique (21a, 21b) à l'une des extrémités (18a, 18b) de la bobine (16), les parties périphériques étant distantes l'une de l'autre, et
- la poignée (1) comprend deux bornes (10, 10') connectables auxdites parties périphériques (21a, 21b) respectives et alignées suivant une direction non parallèle au fond (9) du récipient (3).

15. Article culinaire selon l'une quelconque des revendications 1 à 14, **caractérisé en ce que** la bobine (16) est fixée au récipient (3) par dépôt.

16. Article culinaire selon la revendication 12, **caractérisé en ce que** la distance entre les liaisons électriques (19a, 19b) est telle que l'inductance est inférieure à 100 µH pour un courant de 4A.

17. Article culinaire selon l'une quelconque des revendications 1 à 16, **caractérisé en ce que** la poignée (1) comprend des moyens de stockage d'énergie électrique (6) logés dans le corps de préhension (7) et reliés électriquement à la fois à la bobine (16) pour son rechargement en énergie électrique et au dispositif électrique et/ou électromécanique (5) pour alimenter de ce dernier.

18. Article culinaire selon l'une quelconque des revendications 1 à 17, **caractérisé en ce que** le dispositif électrique et/ou électromécanique (5) comprend les moyens de fixation (2) de façon à obtenir des moyens de fixation motorisés.

19. Article culinaire selon l'une des revendications précédentes, **caractérisé en ce que** le fond comprend un insert (80,87) en un métal magnétisable :
- qui est fixé à une couche métallique malléable du substrat,
- et/ou qui est plus dur que cette couche malléable à laquelle il est fixé,
l'insert ou la couche malléable présentant une gorge(85,91) dans laquelle est disposée la bobine (16).

20. Article culinaire selon l'une des revendications 1 à 18, **caractérisé en ce que** le fond comprend une structure de substrat multicouches (97,99) dont au moins une couche extérieure (97) magnétisable, l'une des couches comportant une gorge (101) dans laquelle la bobine (16) est disposée.

## Patentansprüche

1. Kochartikel, der mit einer Induktionsheizung kompatibel ist und umfasst:
- einen Behälter (3), der geeignet ist, Nahrungsmittel aufzunehmen und ein metallisches Substrat umfasst, das einen magnetisierbaren Boden (9) und eine Seitenwand (4) aufweist, die am Umfang des Bodens (9) in seiner Verlängerung vorgesehen ist, wobei der Boden (9) eine innere Fläche (14a), die die Lebensmittel aufnimmt, und eine äußere Fläche (14b) aufweist, die geeignet ist, auf einer externen Induktionsheizeinrichtung (15) aufzuliegen,
- eine elektrische und/oder elektromechanische Vorrichtung (5);
- mindestens eine Spule (16), die Elektrizität aus einem magnetischen Fluss generiert, der von der Induktionsheizeinrichtung erzeugt wird, um die elektrische und/oder elektromechanische Vorrichtung zu versorgen; und
- ein Küchenutensil, ein Zubehör des Behälters, wie ein Griff oder eine Abdeckung, das die elektrische und/oder elektromechanische Vorrichtung (5) umfasst,
**dadurch gekennzeichnet, dass** die Spule (16) an dem Boden (9) angeordnet ist:
- entweder auf der inneren (14a) oder auf der äußeren Fläche (14b) des Bodens (9) des metallischen Substrats des Behälters (3),
- oder in das Substrat eingebettet ist, innerhalb:
* entweder eines gegossenen Metallmaterials,
* oder mehrerer metallischer Schichten, die ohne klebrigen Klebstoff durch Verformung und/oder physikalisch-chemischen Metallbindung miteinander verbunden sind,
dass der Kochartikel und der Behälter:
- jeweils umfassen:
* mindestens einen Verbindungsanschluss (10, 10'), der mit der elektrischen und/oder elektromechanischen Vorrichtung (5) verbunden ist, und
* einen komplementären Anschluss (11, 11'), der mit dem Verbindungsanschluss elektrisch verbindbar ist und mit der Spule (16) verbunden ist,
- und eingerichtet sind, so dass der erste stabil von dem zweiten getragen wird, wobei sie mit den komplementären Verbindungsanschlüssen in Kontakt sind,
und dass die Spule (16) eine offene Schleife und zwei Enden (18a, 18b) umfasst, die jeweils mit einer elektrischen Verbindung (19a, 19b) verbunden sind, die an der Wand der Behälter (3) befestigt ist, wobei sich die elektrische Verbindung (19a, 19b) bis in die Nähe der oberen Kante (20) der Seitenwand (4) erstreckt und den komplementären Anschluss (11, 11') des Behälters (3) bildet.

2. Kochartikel nach Anspruch 1, **dadurch gekennzeichnet, dass** der Boden umfasst:
- eine mehrschichtige Substratstruktur,
- und/oder mindestens:
* eine Versteifungsabformung,
* oder einen Einsatz aus einem magnetisierbaren Metall, der an einer verformbaren metallischen Schicht des Substrats befestigt ist, und/oder der härter als diese verformbare Schicht ist.

3. Kochartikel nach mindestens einem der vorhergehenden Ansprüche, **dadurch gekennzeichnet, dass** die Spule in das metallisches Substrat eingebettet ist, wo sie von einer elektrisch isolierenden Schicht umgeben ist, die sie von dem elektrisch leitenden Substrat trennt, das elektrisch leitfähig ist.

4. Kochartikel nach mindestens einem der vorhergehenden Ansprüche, **dadurch gekennzeichnet, dass** die Spule (16) außerhalb des metallischen Substrats angeordnet ist, von dem sie durch eine elektrisch isolierende Schicht getrennt ist.

5. Kochartikel nach mindestens einem der vorhergehenden Ansprüche, **dadurch gekennzeichnet, dass** die Spule (16) zwischen zwei metallischen Schichten angeordnet ist, von denen eine Schicht auf Basis von Aluminium und eine Schicht auf Basis von ferritischem rostfreiem Stahl ist, die die äußere Oberfläche (14b) des Bodens (9) umfasst.

6. Kochartikel nach mindestens einem der Ansprüche 1 bis 5, **dadurch gekennzeichnet, dass** er einen Griff (1) umfasst, der an dem Behälter (3) zum Ergreifen des Kochartikels befestigt ist und umfasst:
- Befestigungsmittel (2), die mit dem Behälter (3) verbindbar und von diesem trennbar sind,
- mindestens einen Verbindungsanschluss (10, 10'), der mit der elektrischen und/oder elektromechanischen Vorrichtung (5) verbunden ist und mit mindestens einem komplementären Anschluss (11, 11') elektrisch verbindbar ist, der an dem Behälter (3) vorgesehen ist und mit der Spule (16) verbunden ist.

7. Kochartikel nach Anspruch 6, **dadurch gekennzeichnet, dass** die Befestigungsmittel (2) eine Kontaktfläche (12) umfassen, die eingerichtet ist, um mit einer komplementären Kontaktfläche (13) in Kontakt zu kommen, die an dem Behälter (3) vorgesehen ist, um die Fixierung des Griffs (1) an dem Behälter (3) sicherzustellen, wobei die Kontaktfläche (12) der Befestigungsmittel (2) mindestens einen Verbindungsanschluss (10, 10') trägt.

8. Kochartikel nach Anspruch 1, **dadurch gekennzeichnet, dass**:
- das Utensil Befestigungsmittel (2) umfasst, die mit dem Behälter (3) verbindbar und von diesem trennbar sind, und
- die Befestigungsmittel (2) eine Kontaktfläche (12) umfassen, die eingerichtet ist, mit einer komplementären Kontaktfläche (13) des Behälters (3) in Kontakt zu kommen, um die Befestigung des Utensils (1) an dem Behälter (3) sicherzustellen, wobei die Kontaktfläche (12) der Befestigungsmittel (2) mindestens einen Verbindungsanschluss (10, 10') trägt.

9. Kochartikel nach Anspruch 6, **dadurch gekennzeichnet, dass** die Befestigungsmittel (2) zwei Backen (2a, 2b) umfassen, die Klemmen bilden, die relativ zueinander bewegbar sind, um den Griff (1) zu fixieren, wobei eine der zwei Backen (2a, 2b) mindestens zwei Anschlüsse (10, 10') umfasst.

10. Kochartikel nach Anspruch 9, **dadurch gekennzeichnet, dass** die zwei Backen (2a, 2b) die Wand (4) des Behälters (3) einklemmen, an der mindestens ein komplementärer Anschluss (11, 11') angeordnet ist, wobei jeder Anschluss (10, 10') des Griffs (1) in Kontakt mit diesem komplementären Anschluss (11, 11') ist.

11. Kochartikel nach Anspruch 9 oder 10, **dadurch gekennzeichnet, dass** die zwei Backen (2a, 2b), die Greifer bilden, eine feste Backe (2b) und eine bewegbare Backe (2a) in Bezug auf den Greifkörper (7) umfassen, wobei die Anschlüsse (10, 10') an der festen Backe (2b) angeordnet sind.

12. Kochartikel nach einem der Ansprüche 4 bis 10, **dadurch gekennzeichnet, dass** der oder die Verbindungsanschlüsse (10, 10') elektrische Kontaktpads (23) sind, die durch elastische Rückstellmittel (24) zurückgedrückt werden, um den Kontaktwiderstand auf weniger als 100 mOhm und vorzugsweise weniger als 10 mOhm zu begrenzen.

13. Kochartikel nach Anspruch 1, **dadurch gekennzeichnet, dass**:
- die zwei elektrischen Anschlüsse (19a, 19b) im Wesentlichen geradlinig, senkrecht zu dem Boden (9) des Behälters (3) und benachbart sind, und
- der Griff (1) zwei Anschlüsse (10, 10') umfasst, die mit den elektrischen Verbindungen (19a, 19b) verbindbar sind und im Wesentlichen parallel zu dem Boden (9) ausgerichtet sind.

14. Kochartikel nach Anspruch 13, **dadurch gekennzeichnet, dass**:
- jede elektrische Verbindung (19a, 19b) durch einen die Wand umgebenden Umfangsabschnitt (21a, 21b) und einen den Umfangsabschnitt (21a, 21b) verbindenden Zwischenabschnitt (22a, 22b) an einem Ende (18a, 18b) der Spule (16) gebildet ist, wobei die peripheren Abschnitte voneinander beabstandet sind, und
- der Griff (1) zwei Anschlüsse (10, 10') umfasst, die mit den jeweiligen Umfangsabschnitten (21a, 21b) verbindbar sind und in einer Richtung ausgerichtet sind, die nicht parallel zu dem Boden (9) des Behälters (3) ist.

15. Kochartikel nach einem der Ansprüche 1 bis 14, **dadurch gekennzeichnet, dass** die Spule (16) durch Abscheidung an dem Behälter (3) befestigt ist.

16. Kochartikel nach Anspruch 12, **dadurch gekennzeichnet, dass** der Abstand zwischen den elektrischen Verbindungen (19a, 19b) derart ist, dass die Induktivität weniger als 100 µH für einen Strom von 4 A beträgt.

17. Kochartikel nach einem der Ansprüche 1 bis 16, **dadurch gekennzeichnet, dass** der Griff (1) Mittel zur Speicherung von elektrischer Energie (6) umfasst, die in dem Greifkörper (7) untergebracht sind und elektrisch gleichzeitig mit der Spule (16) für ihre Wiederaufladung mit elektrischer Energie und mit der elektrischen und/oder elektromechanischen Vorrichtung (5) für die Versorgung der letzteren verbunden sind.

18. Kochartikel nach einem der Ansprüche 1 bis 17, **dadurch gekennzeichnet, dass** die elektrische und/oder elektromechanische Vorrichtung (5) die Befestigungsmittel (2) umfasst, um motorisierte Befestigungsmittel zu erhalten.

19. Kochartikel nach einem der vorhergehenden Ansprüche, **dadurch gekennzeichnet, dass** der Boden einen Einsatz (80, 87) aus einem magnetisierbaren Metall umfasst:
- der an einer verformbaren metallischen Schicht des Substrats befestigt ist,
- und/oder der härter als diese verformbare Schicht ist, an der er befestigt ist,
wobei der Einsatz oder die verformbare Schicht eine Nut (85, 91) aufweist, in der die Spule (16) angeordnet ist.

20. Kochartikel nach einem der Ansprüche 1 bis 18, **dadurch gekennzeichnet, dass** der Boden eine mehrlagige Substratstruktur (97, 99) darunter mindestens eine magnetisierbare äußere Schicht (97) umfasst, wobei eine der Schichten eine Nut (101) aufweist, in der die Spule (16) angeordnet ist.

## Claims

1. Culinary article compatible with induction heating and comprising:
- a recipient (3) suitable for receiving foodstuffs and comprising a metal substrate comprising a base (9) that can be magnetised and a side wall (4) set up at the periphery of the base (9) in its extension, the base (9) having an internal surface (14a) receiving foodstuffs and an external surface (14b) suitable for resting on an external induction heating means (15),
- an electrical and/or electromechanical device (5);
- at least one coil (16) generating electricity from a magnetic flux produced by the induction heating means in order to power the electrical and/or electromechanical device; and,
- a kitchen utensil, accessory of the recipient, such as a handle or a lid, which comprises the electrical and/or electromechanical device (5),
**characterised in that** the coil (16) is placed at the location of the base (9):
- either on the internal surface (14a) or external surface (14b) of the base (9) of the metal substrate of the recipient (3),
- or embedded in said metal substrate, within:
* either a moulded metal material,
* or several metal layers that are joined together, without adhesive bonding, by deformation and/or physico-chemical metal-metal bonding,
**in that** the kitchen utensil and the recipient:
- comprise respectively:
* at least one connection terminal (10, 10') connected to the electrical and/or electromechanical device (5), and
* an additional terminal (11, 11') that can be electrically connected with the connection terminal and connected to the coil (16),
- and are suitable so that the first is carried in a stable manner by the second by then being in contact by said additional connection terminals.
and **in that** the coil (16) comprises an open loop and two ends (18a, 18b) each one connected to an electrical connection (19a, 19b) fastened to the wall of the recipient (3), with the electrical connection (19a, 19b) extending to the vicinity of the upper edge (20) of the side wall (4) and forming the additional terminal (11, 11') of the recipient (3).

2. Culinary article according to claim 1, **characterised in that** the base comprises:
- a multilayer substrate structure,
- and/or at least:
* one stiffening imprint,
* or an insert made from a metal that can be magnetised which is fastened to a malleable metal layer of the substrate and/or which is harder than this malleable layer.

3. Culinary article according to one of the preceding claims, **characterised in that** the coil is embedded in the metal substrate where it is surrounded by an electrically insulating layer which separates it from said substrate, which is electrically conductive.

4. Culinary article according to one of the preceding claims, **characterised in that** the coil (16) is placed outside the metal substrate from which it is separated by an electrically insulating layer.

5. Culinary article according to one of the preceding claims, **characterised in that** the coil (16) is placed between two metal layers of which one aluminium layer and one ferritic stainless steel layer comprising the external surface (14b) of the base (9).

6. Culinary article according to at least one of claims 1 to 5, **characterised in that** it comprises a handle (1) fastened to the recipient (3) for the gripping of the culinary article and comprising:
- means for fastening (2) that can be connected to the recipient (3) and which can be disconnected from the latter,
- at least one connection terminal (10, 10') connected to the electrical and/or electromechanical device (5) and which can be connected electrically with at least one additional terminal (11, 11') provided on the recipient (3) and connected to the coil (16).

7. Culinary article according to claim 6, **characterised in that** the means for fastening (2) include a contact surface (12) suitable for coming into contact with an additional contact surface (13) provided on the recipient (3) in order to provide for the fastening of the handle (1) on the recipient (3), said contact surface (12) means for fastening (2) carrying at least one connection terminal (10, 10').

8. Culinary article according to claim 1, **characterised in that**:
- the utensil comprises means for fastening (2) which can be connected to the recipient (3) and which can be disconnected from the latter, and,
- the means for fastening (2) comprise a contact surface (12) suitable for coming into contact with an additional contact surface (13) of the recipient (3) in order to provide a fastening of the utensil (1) on the recipient (3), said contact surface (12) means for fastening (2) carrying at least one said connection terminal (10, 10').

9. Culinary article according to claim 6, **characterised in that** the means for fastening (2) include two jaws (2a, 2b) forming pliers movable in relation to one another in order to fasten the handle (1), with one of the two jaws (2a, 2b) comprising at least two terminals (10, 10').

10. Culinary article according to claim 9, **characterised in that** the two jaws (2a, 2b) clamp the wall (4) of the recipient (3) whereon is placed at least one additional terminal (11, 11'), with each terminal (10, 10') of the handle (1) being in contact with this additional terminal (11, 11').

11. Culinary article according to claim 9 or 10, **characterised in that** the two jaws (2a, 2b) forming pliers include a fixed jaw (2b) and a movable jaw (2a) in relation to the gripping body (7), with the terminals (10, 10') being placed on the fixed jaw (2b).

12. Culinary article according to any of claims 4 to 10, **characterised in that** the connection terminal or terminals (10, 10') are electrical contact pads (23) pushed back by elastic means of return (24), in order to limit the resistance of the contact to less than 100 mOmhs, and more preferably to less than 10 mOmhs.

13. Culinary article according to claim 1, **characterised in that**:
- the two electrical connections (19a, 19b) are substantially straight, perpendicular to the base (9) of the recipient (3) and adjacent, and
- the handle (1) comprises two terminals (10, 10') that can be connected to said electrical connections (19a, 19b) and aligned substantially parallel to the base (9).

14. Culinary article according to claim 13, **characterised in that**:
- each electrical connection (19a, 19b) is formed by a peripheral portion (21a, 21b) surrounding the wall and an intermediate portion (22a, 22b) connecting the peripheral portion (21a, 21b) at one of the ends (18a, 18b) of the coil (16), with the peripheral portions being separated from one another, and
- the handle (1) comprises two terminals (10, 10') that can be connected to said respective peripheral portions (21a, 21b) and aligned according to a direction that is not parallel to the base (9) of the recipient (3).

15. Culinary article according to any of claims 1 to 14, **characterised in that** the coil (16) is fastened to the recipient (3) by deposition.

16. Culinary article according to claim 12, **characterised in that** the distance between the electrical connections (19a, 19b) is such that the inductance is less than 100 µH for a current of 4A.

17. Culinary article according to any of claims 1 to 16, **characterised in that** the handle (1) comprises means for storing electrical energy (6) housed in the gripping body (7) and electrically connected to both the coil (16) for the charging thereof with electrical energy and to the electrical and/or electromechanical device (5) in order to supply the latter.

18. Culinary article according to any of claims 1 to 17, **characterised in that** the electrical and/or electromechanical device (5) comprises the means for fastening (2) in such a way as to obtain motorised means for fastening.

19. Culinary article according to one of the preceding claims, **characterised in that** the base comprises an insert (80, 87) made of a metal that can be magnetised:
- which is fastened to a malleable metal layer of the substrate,
- and/or which is harder than this malleable layer to which it is fastened, with the insert or the malleable layer having a groove (85, 91) wherein is arranged the coil (16).

20. Culinary article according to one of claims 1 to 18, **characterised in that** the base comprises a multilayer substrate structure (97, 99) of which at least one external layer (97) that can be magnetised, with one of the layers comprising a groove (101) wherein the coil (16) is placed.
